# EUROPÄISCHE PATENTSCHRIFT

(11) **EP 2 739 520 B1**
(45) Veröffentlichungstag und Bekanntmachung des Hinweises auf die Patenterteilung: **03.06.2015**
(21) Anmeldenummer: 12758744.2
(22) Anmeldetag: 03.08.2012
(51) Int. Cl.: B62D 1/20, F16D 1/08, F16D 3/38

(54) **LENKSPINDELANORDNUNG**
STEERING SPINDLE ARRANGEMENT
AGENCEMENT D'ARBRE DE DIRECTION

(30) Priorität: 06.08.2011 DE 102011109691
(43) Veröffentlichungstag der Anmeldung: 11.06.2014
(73) Patentinhaber: Daimler AG, 70327 Stuttgart (DE)
(72) Erfinder: HEBENSTREIT, Axel, 70569 Stuttgart (DE); LÖFFLER, Hans-Dieter, 72766 Reutlingen (DE); MEYER, Thorsten, 72218 Wildberg (DE)
(74) Vertreter: JENSEN & SON
(86) Internationale Anmeldenummer: PCT/EP2012/003319
(87) Internationale Veröffentlichungsnummer: WO 2013/020684

(56) Entgegenhaltungen:
- DE-A1- 10 012 322
- JP-A- 10 205 545

## Beschreibung

Die Erfindung betrifft eine Lenkspindelanordnung eines Kraftfahrzeugs an der Schnittstelle der Lenkspindel mit der Lenkungskupplung.

Die bislang durchgeführte Direktverschraubung der Lenkspindel unten mit der Lenkungskupplung ist im Packageumfeld aus Abgasanlage, Katalysatoren, Motor und Leitungen nur mit erheblichem Aufwand möglich. Dabei wird die Lenkspindel unten mit der Lenkungskupplung quer zur Lenkspindelrichtung verschraubt. Dies hat zum einen den Nachteil der schlechten Zugänglichkeit, zum anderen erhöht sich die Variantenanzahl bei Optimierung der Zugänglichkeit für unterschiedliche Motorvarianten und Lenkungslagen, etwa Links- und Rechtslenkermodelle, und zusätzlich können Standardmontagereihenfolgen, wie etwa der Zeitpunkt der Montage der Abgasanlage kaum oder gar nicht eingehalten werden. Bei einem anderen Ansatz der Gestaltung der Vorrichtung wird auf das Lenkungskupplungsteil verzichtet und nur die Lenkspindel unten verwendet, wobei hier allerdings nachteilig ein Hochfahren des Motors in Z-Richtung während der Hochzeit, der Zusammenführung der vormontierten Motor-/Getriebe- und Fahrwerkseinheit, nicht möglich ist.

So beschreibt die DE 10 2008 006 497 A1 eine Montageanordnung zum Verbinden einer Lenkspindel mit einer Lenkungskupplung. Das Endstück der Lenkspindel wird in einen endseitigen Aufnahmebereich der Lenkungskupplung eingeführt, wobei die Montageanordnung eine Vorrichtung umfasst, um im Wesentlichen das koaxiale Ausrichten der Lenkspindel und der Lenkungskupplung zu leisten. So wird das automatisierte Zusammenführen der Lenkspindel mit der Lenkungskupplung ermöglicht, da ein manuelles koaxiales Ausrichten der Lenkspindel und der Lenkungskupplung vermeidbar ist. Dazu weist die Lenkspindel dort ein endseitiges Hakenelement auf, in das eine Zugbandschlaufe, die aus dem endseitigen Aufnahmebereich der Lenkungskupplung herausragt, vor der Hochzeit eingehängt wird. Durch Ziehen an der Schlaufe des Zugbandes wird das Hakenelement zusammen mit dem Endstück der Lenkspindel in den endseitigen Aufnahmebereich der Lenkungskupplung eingeführt, um dort verschraubt zu werden.

Die DE 10 2005 006 251 A1 adressiert das Problem, die Montage einer Lenkspindel an einem Kraftfahrzeug zu vereinfachen. Dazu weist die Lenkspindel, die einenends mit einem Lenkrad und anderenends über eine Lenkungskupplung mit einem Lenkgetriebe verbindbar ist, einen Zylinderkörper und einen darin teleskopierbar eingesteckten Kolbenstangenkörper auf. Die Lenkspindel hat einen Pneumatikanschluss, der mit einem Zylinderraum kommuniziert, der im Zylinderkörper angeordnet ist und vom Kolbenstangenkörper axial begrenzt ist, wobei der Kolbenstangenkörper durch eine Druckbeaufschlagung des Zylinderraums aus dem Zylinderkörper ausgetrieben wird. So muss das für die Anbindung an die Lenkungskupplung vorgesehene Spindelende nicht von Hand in den Motorraum hineingezogen werden, sondern kann durch die Druckbeaufschlagung in den Motorraum eingefahren werden, ohne dass es hierzu erforderlich ist, das genannte Spindelende zu berühren. Auch hier werden Lenkspindelende und Lenkungskupplung quer zur Lenkspindelrichtung verschraubt.

Ferner ist aus der DE 102 39 202 B4 eine Verbindung zwischen einer Lenkwelle und einem Lenkgetriebe in einem Kraftfahrzeug mit einem teilbaren Gelenk bekannt, durch das Montage- und Demontageprozesse vereinfacht werden. Dazu weist das Gelenk einen mit Vorsprüngen ausgestatteten, zur Montage durch eine Öffnung im Fußraum des Kraftfahrzeuges hindurchführbaren Fortsatz auf, welcher in eine außerhalb des Fußraumes relativ zu dem Fortsatz bewegliche, in Richtung des Fußraumes erweiterte kelch- oder tulpenförmige Aufnahme drehfest einführbar ist. Das Gelenk ist als Tripodengelenk ausgeführt, wobei der Fortsatz einen Tripodenkopf mit drei radial sich von dem Fortsatz erstreckenden Segmenten aufweist, die in korrespondierende Nuten der Aufnahme eingreifen.

Weiterhin ist aus der JP 10 205545 A eine Lenkungsanordnung mit einer Klemmkupplung entnehmbar, bei der ein wellenförmiger, endseitig verzahnter Spindelabschnitt mit einem Gabelkopf, der einen innenverzahnten Aufnahmeraum aufweist, steckverbindbar ist. Um die Kupplung zu sichern, ist der Aufnahmeraum segmentiert, wobei die Segmente mittels eines außenseitig umgebenden federbelasteten Schließrings elastisch zustellbar sind. Durch die Zustellkraft wird ein Klemmmoment auf den verzahnten Spindelabschnitt bewirkt.

Aufgrund der engen Bauraumverhältnisse steht der Lenkungsstrang der Montage des Motormoduls mit der Karosserie normalerweise im Weg. Die Bereitstellung eines Zwischenstücks, das die Lenkungskupplung mit dem Ende der Lenkspindel verbindet, ermöglicht, dass dieses an der Schnittstelle, an der es mit dem Lenkspindelende verschraubt ist, im losen Zustand, d. h. unverschraubt, weggeschwenkt werden kann, um die Montage des Motormoduls zu erleichtern. Die Lenkspindel kann in Lenkradrichtung ein Stück weit zurückgeschoben werden. Nach der Montage des Motors muss das Zwischenstück wieder mit dem Lenkspindelende verbunden werden. Dies ist für den Monteur extrem schwer, da der Bauraum für eine handwerkliche Betätigung kaum Spielraum lässt und die Verbindungspartner optisch schlecht erfassbar sind.

Ausgehend von diesem Stand der Technik ergibt sich die Aufgabe, nicht nur das Zusammenführen von Lenkspindelende und Lenkungskupplung zu vereinfachen, sondern auch eine Anordnung zu schaffen, die ermöglicht, dass die zusammengeführten Lenkspindel-und Lenkungskupplungsenden in der richtigen Relativlage zueinander verbunden werden und somit eine Fehlmontage ausgeschlossen werden kann.

Diese Aufgabe wird durch eine Lenkungsanordnung mit den Merkmalen des Anspruchs 1 gelöst. Weiterbildungen der Vorrichtung sind in den Unteransprüchen ausgeführt.

Eine erste Ausführungsform bezieht sich auf eine Lenkungsanordnung, die eine Lenkspindel mit einem Lenkspindelanschluss aufweist, der über ein Zwischenstück mit einem Gabelkopf einer Lenkungskupplung verbunden ist, wobei der Lenkspindelanschluss und das Zwischenstück an einander zugewandten Enden mittels zumindest eines Nut- und Feder-Führungselementepaares, das eine Drehmoment übertragende Zwangsführung bereitstellt, als Steckpartner ausgebildet sind. Jeder der Steckpartner, Lenkspindelanschluss und Zwischenstück, weist dabei als das zumindest eine Führungselement eine Nut oder eine korrespondierende Feder auf. Die Nut und die Feder des zumindest einen Nut- und Feder-Führungselementepaares sind an dem Lenkspindelanschluss und dem Zwischenstück längsaxial orientiert, wobei die Lenkungsanordnung eine Spannvorrichtung umfasst, die die Steckpartner in einer Stecklage gegeneinander verspannt.

Aufgrund der erfindungsgemäßen Führungselemente, die von einem Monteur ohne Weiteres ertastbar oder optisch wahrnehmbar sind, können die Lenkspindel und das Zwischenstück der Kupplung in vorteilhaft einfacher Weise zusammengeführt werden, wobei sie durch die vorgegebene Führung immer die richtige Relativlage zueinander einnehmen. Die Spannvorrichtung verbindet die Steckpartner aufgrund der Anpresskraft so, dass ungewolltes Lösen der Steckpartner im Fahrbetrieb unterbunden wird. Die durch Nut und Feder gebildeten Führungselemente erstrecken sich ausschließlich längs der Lenkspindelachse. Daher wird eine klemmfreie und für den Monteur leicht auszuführende Handhabbarkeit der Steckpartner zum Erreichen der Steckverbindung ermöglicht.

Vorzugsweise weisen die Nut und die Feder des zumindest einen Nut- und Feder-Führungselementepaares eine Keilform auf, wobei die Nut sich in längsaxialer Richtung zu der von dem Steckpartner abgewandten Seite hin verjüngt, und die Feder sich in längsaxialer Richtung zu der dem Steckpartner zugewandten Seite hin verjüngt.

In einer Ausführungsform sind die Nut(en) an dem Lenkspindelanschlusses und die Feder(n) an dem Zwischenstück vorgesehen. So können an der zylindrischen Außenseite des Endes des Lenkspindelanschlusses, das dem Zwischenstück zugewandt ist, die zumindest eine, bevorzugt mehrere, besonders bevorzugt drei um 120° versetzt zueinander angeordnete Nuten vorgesehen sein, während an der zylindrischen Innenseite des Zwischenstücks eine oder mehrere Federn bereitgestellt sind. Die Anzahl der Nuten kann dabei höher sein, als die Anzahl der Federn, so dass für jede Feder des Zwischenstücks zumindest eine Nut an dem Lenkspindelanschluss vorliegt. Generell ist natürlich auch denkbar, die Nuten im Zwischenstück und die Federn am Lenkspindelanschluss vorzusehen, oder beides an beiden Steckpartnern wechselweise anzuordnen.

Ferner können die Nuten an dem Lenkspindelanschluss an ihrem von dem Zwischenstück abgewandten Ende in einen Absatz oder eine Ringnut münden, dessen/deren radiale Tiefe einer Nuttiefe entspricht oder größer ist.

Bevorzugt weisen der Lenkspindelanschluss und das Zwischenstück Nut- und Feder-Führungselementepaare auf, die unterschiedlich breit ausgebildet sind und/oder asymmetrisch über den Umfang von Lenkspindelanschluss und das Zwischenstück verteilt sind. Hierdurch wird eine eindeutige Zuordnung der Nut-Federführungselemente der Steckpartner ermöglicht, so dass eine definierte Relativlage des Lenkspindelanschlusses und des Zwischenstücks zueinander festgelegt ist und keine Fehlsteckverbindung bei der Montage erfolgen können. Bei einer symmetrischen Anordnung an der zylindrischen Außenseite des Lenkspindelanschlusses und der Innenseite des Zwischenstücks sind - wie oben angesprochen - jeweils drei Nuten und Federn um 120° versetzt zueinander angeordnet. Die Anzahl der Nuten kann dabei höher sein als die Anzahl der Federn, so dass für jede Feder des Zwischenstücks zumindest eine Nut an dem Lenkspindelanschluss vorliegt. Generell ist natürlich auch denkbar, die Nuten im Zwischenstück und die Federn am Lenkspindelanschluss vorzusehen, oder beides an beiden Steckpartnern wechselweise anzuordnen. Mit einer Mehrzahl an Nuten und Federn wird auch die Fähigkeit der Steckpartner verbessert, höhere Drehmomente zu übertragen.

Um das Zwischenstück ist eine relativ zu dem Zwischenstück bewegliche Hülse angeordnet, die an einem lenkspindelseitigen Ende der Hülse ein oder mehrere sich von dem Rand der Hülse radial nach innen erstreckenden Zahnsegmente aufweist, die in der Stecklage in den Absatz bzw. die Ringnut eingreifen, der/die durch seine kupplungsseitige Flanke einen Anschlag bildet.

Die Spannvorrichtung, mittels derer die Steckpartner in der Stecklage gegeneinander verspannt werden können, umfasst einen abkragenden Ringbund des Zwischenstücks, eine Schraubenfeder, die um das Zwischenstück angeordnet ist, und eine axial beweglich auf dem Zwischenstück angeordnete Führungsvorrichtung mit zumindest einem Führungszapfen. Der Ringbund erstreckt sich an dem lenkspindelseitigen Ende des Zwischenstücks radial auswärts, wobei sich die um das Zwischenstück angeordnete Schraubenfeder einenends an dem Ringbund abstützt. Anderenends stützt sich die Schraubenfeder an dem Führungszapfen ab.

Bei der Führungsvorrichtung kann es sich um eine Spannhülse handeln, von der sich der Führungszapfen radial auswärts erstreckt, und die ferner in einem Umfangsbereich eine Federzunge, die von einem Sicherungsstift durchdrungen wird, und einen zweiten Führungszapfen aufweist, der sich radial nach innen erstreckt, und der in eine Längsnut, die in der Außenseite des Zwischenstücks längsaxial eingebracht ist, eingreift. Der in dieser Längsnut laufende innere Führungszapfen stellt sicher, dass die Spannhülse lediglich axial verschoben wird. Die Führungsvorrichtung kann alternativ in einem Ring oder einem Ringsegment bestehen, der oder das an zwei diametral entgegengesetzten Stellen Löcher aufweist, die einen den Führungszapfen bildenden Bolzen aufnehmen.

Ferner kann vorgesehen sein, dass sich das Zwischenstück an dem von dem Ringbund abgewandten kupplungsseitigen Ende in einem stufenförmigen Absatz verjüngt, der näherungsweise einer Rampenform des kupplungsseitigen Endes des Lenkspindelanschlusses entspricht. In einem absatznahen Bereich des Zwischenstücks in dem Abschnitt zwischen dem Absatz und dem Ringbund kann zum einen ein Schlitz ausgebildet sein, durch den sich der Sicherungsstift erstreckt, zum anderen kann die Längsnut ebenfalls in dem absatznahen Bereich des Zwischenstück in dem Abschnitt zwischen dem Absatz und dem Ringbund angeordnet sein, wobei sie vorzugsweise den Absatz durchbricht, so dass die Anordnung der Spannhülse mit dem nach innen weisenden Führungszapfen erleichtert wird.

Die Hülse, die das Zwischenstück, die Führungsvorrichtung und die Schraubenfeder umgibt, kann ferner zumindest einen Schlitz aufweisen, der eine Führungskulisse für den radial sich nach außen erstreckenden Führungszapfen der Führungsvorrichtung bildet. Dieser Schlitz kann wendelförmig verlaufen.

In einer weiteren Ausführungsform kann das Zwischenstück einen Steuerstift umfassen, der sich von einer Umfangsfläche des Ringbunds erstreckt. Dazu kann der Steuerstift in einer Bohrung in der Umfangsfläche angeordnet sein. Der Steuerstift kann dann in einen weiteren Schlitz in der Hülse eingreifen, der in dem lenkspindelseitigen Endbereich der Hülse als Führungskulisse ausgebildet ist. Dieser Schlitz weist insbesondere einen ersten Streckenabschnitt in Umfangsrichtung und einen zweiten Streckenabschnitt rechtwinklig zu dem ersten Streckenabschnitt in axialer Richtung zu dem lenkspindelseitigen Ende der Hülse hin verlaufend auf.

Alternativ zu dem Steuerstift und dessen Kulisse kann die Hülse an ihrer Innenseite hinter jedem Zahnsegment einen Nocken aufweisen, der bezüglich des Zahnsegments radial zurückversetzt ist und der in der Stecklage, in der die Zahnsegmente die kupplungsseitige Flanke des Absatzes/der Ringnut hintergreift, in eine Aussparung des Ringbunds eingreift. Ferner ist für jeden Nocken als Transportsicherung eine muldenförmige Ausprägung an einer Stirnseite des Zwischenstücks ausgebildet ist, in die die Nocken in einer Transportanordnung der Lenkungsanordnung eingreifen. So sind die Bauteile durch die Transportsicherung bis zu dem Zusammenbau vor Missbrauch geschützt.

Zudem kann die Lenkungsanordnung nach einer weiteren erfindungsgemäßen Ausführungsform in der Hülse benachbart zu einem der Zahnsegmente eine weitere Aussparung aufweisen, die eine Sicherheitsringkontur zeigt oder einen eingelassenen Sicherungsring umfasst. In diese Aussparung, bzw. in den in der Aussparung eingelassenen Sicherungsring kann ein Zapfen, der sich axial von der Stirnseite des Zwischenstücks erstreckt, aufgenommen werden, wenn die Nocken in den Aussparungen des Ringbunds einrasten. Dieser Zapfen weist dazu eine Kontur auf, die mit der Sicherheitsringkontur der Aussparung bzw. dem darin eingelassenen Sicherungsring korrespondiert. Durch diesen mechanischen Formschluss ist auch bei Ausfall der Vorspannelemente eine sichere Verbindung der Steckpartner und damit der Lenkspindel gewährleistet.

Vorteilhaft werden durch die erfindungsgemäße Steckverbindung Fehlmontagen ausgeschlossen, darüber hinaus kann verschleißbedingtes Spiel kann bis zu einem gewissen Grad kompensiert werden.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Gegenstände oder Teile von Gegenständen, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1: eine perspektivische Ansicht der Komponenten einer Lenkungsanordnung nach einer erfindungsgemäßen Ausführungsform,
- Fig. 2: eine perspektivische Schnittansicht durch die Lenkungsanordnung in Stecklage in unverdrehtem Zustand,
- Fig. 3: eine perspektivische Schnittansicht durch die Lenkungsanordnung in Stecklage bei Drehung der Hülse,
- Fig. 4: eine perspektivische Schnittansicht durch die Lenkungsanordnung in Stecklage in verspanntem Zustand,
- Fig. 5: eine perspektivische Ansicht der Steckpartner der Lenkspindelanordnung vor dem Zusammenstecken,
- Fig. 6: eine perspektivische Ansicht der Steckpartner der Lenkspindelanordnung in Stecklage in unverdrehtem Zustand,
- Fig. 7: eine perspektivische Ansicht der Steckpartner der Lenkungsanordnung in Stecklage nach Drehung der Hülse in verspanntem Zustand,
- Fig. 8: eine perspektivische Ansicht der Komponenten einer Lenkungsanordnung nach einer weiteren erfindungsgemäßen Ausführungsform,
- Fig. 9: eine Seitendraufsicht auf einen Lenkspindelanschluss der Lenkungsanordnung aus Fig. 8,
- Fig. 10: eine Draufsicht auf die Stirnseite der Hülse der Lenkungsanordnung aus Fig. 8,
- Fig. 11: eine Teilschnittseitenansicht der Hülse der Lenkungsanordnung aus Fig. 8,
- Fig. 12: eine Teilschnittseitenansicht des Zwischenstücks der Lenkungsanordnung aus Fig. 8.

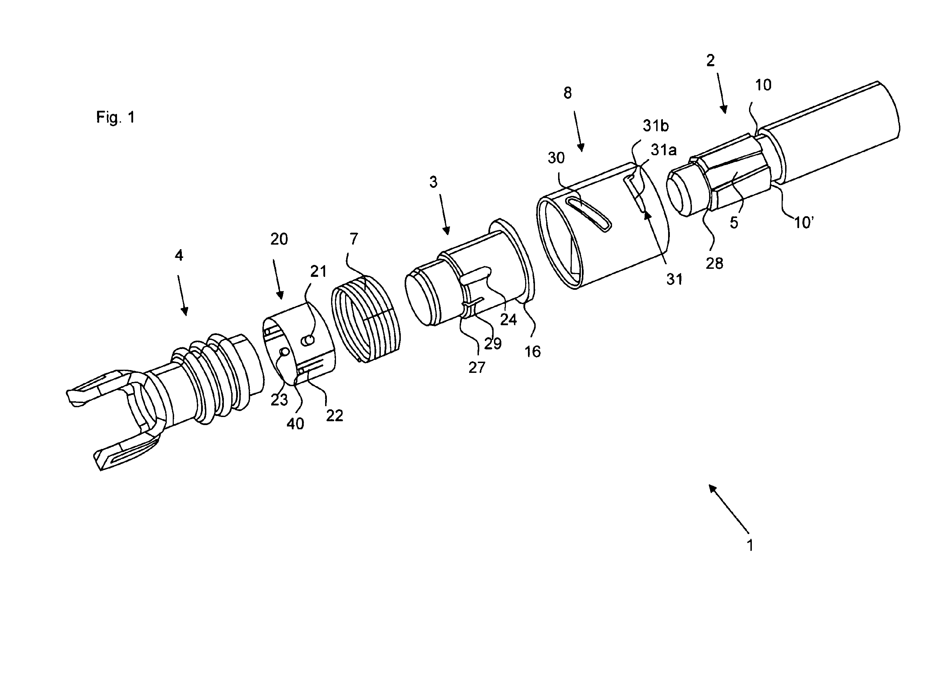

Die Erfindung betrifft eine Lenkungsanordnung mit einem Zwischenstück, das die Lenkungskupplung mit dem Ende der Lenkspindel verbindet. Das Zwischenstück ist einerseits mittels einer Gabel an der Kupplung angelenkt, während andererseits das Zwischenstück mit dem Spindelende verbunden wird. Das Zwischenstück kann an dieser Schnittstelle, an der es mit dem Lenkspindelende verbunden wird, im losen, d.h. unverbundenen Zustand weggeschwenkt werden kann, um die Montage des Motormoduls zu erleichtern, die ansonsten aufgrund enger Bauraumverhältnisse durch den Lenkungsstrang behindert würde. Die Lenkspindel kann zur Montage des Motormoduls an der Karosserie in Lenkradrichtung ein Stück weit zurückgeschoben werden. Nach der Montage des Motors wird das Zwischenstück wieder mit dem Lenkspindelende verbunden. Um diesen Vorgang für den Monteur zu vereinfachen, da der Bauraum für eine handwerkliche Betätigung kaum Spielraum lässt und die Verbindungspartner optisch schlecht erfassbar sind, und damit das Risiko von Fehlmontagen zu minimieren, sind erfindungsgemäß die einander zugewandten Enden der Kupplung und der Lenkspindel, sprich das Zwischenstück und der Lenkspindelanschluss als Steckpartner ausgebildet, die miteinander zusammenwirkende Führungselemente unter Bildung einer drehmomentübertragbaren Zwangsführung aufweisen. Ferner wird eine Spannvorrichtung vorgesehen, um die Steckpartner in Stecklage gegeneinander zu verspannen. Figuren 1 bis 12 verdeutlichen die Komponenten der Lenkungsanordnung und deren Zusammenwirken.

Das Lenkspindelende läuft in einem zylindrischen Zapfen, dem Lenkspindelanschluss 2, aus, der an der Stirnseite umlaufend angefast ist, und dort quasi eine Einführungsrampe 28 aufweist, um die Einführung in die mit der Gelenkgabel 4 verbundene Aufnahme, deren Hauptkomponenten das Zwischenstück 3, die Hülse 8 und die Spannvorrichtung ist, zu erleichtern. Die Spannvorrichtung wird nachfolgend noch detailliert ausgeführt. An den rampenförmigen Absatz 28 schließen sich die Führungselemente 5 des Lenkspindelanschlusses 2 an, bei denen es sich vorliegend um Keilnuten 5 handelt, wie in Fig. 1 und 5 sowie Fig. 8 und 9 zu sehen ist, die in Umfangsrichtung durch Keilsegmente beabstandet sind. Vorzugsweise sind drei Nuten 5 gleichmäßig über den Umfang verteilt, wobei sich die Keilform der Nuten 5 zur Lenkradseite hin verjüngt.

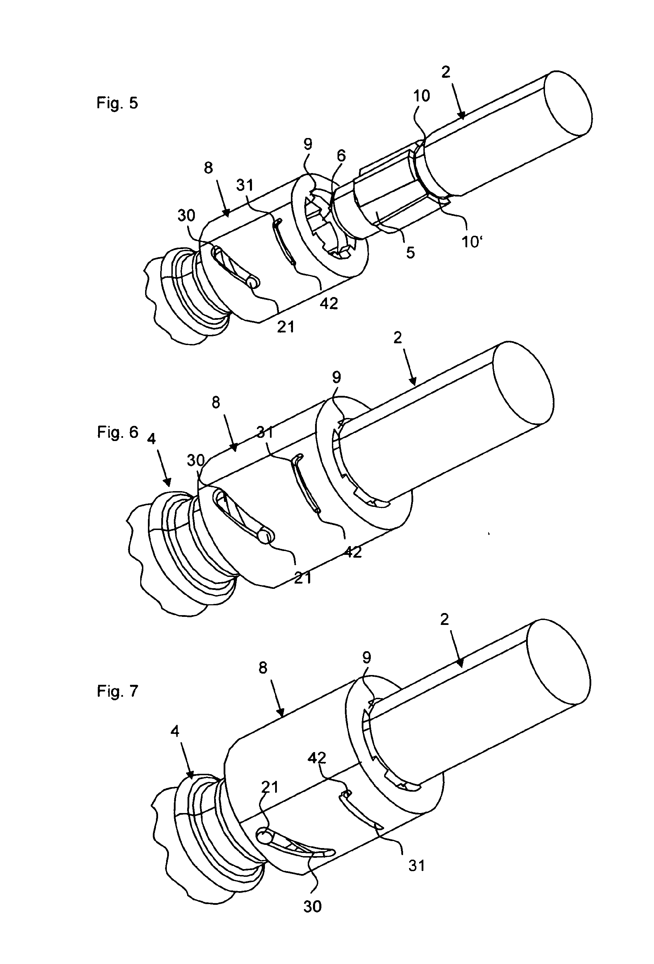

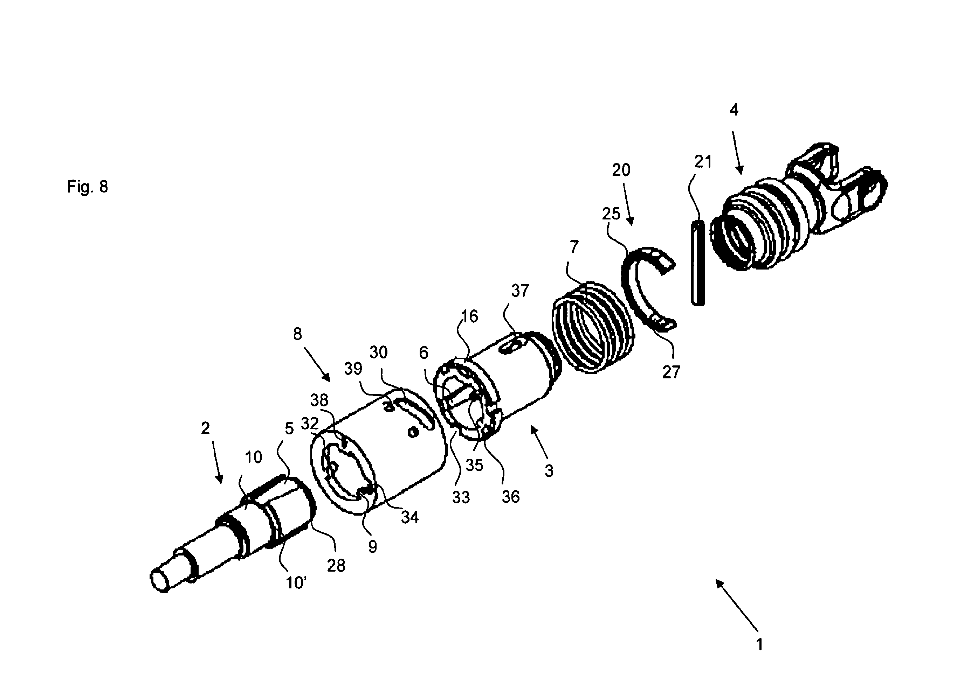

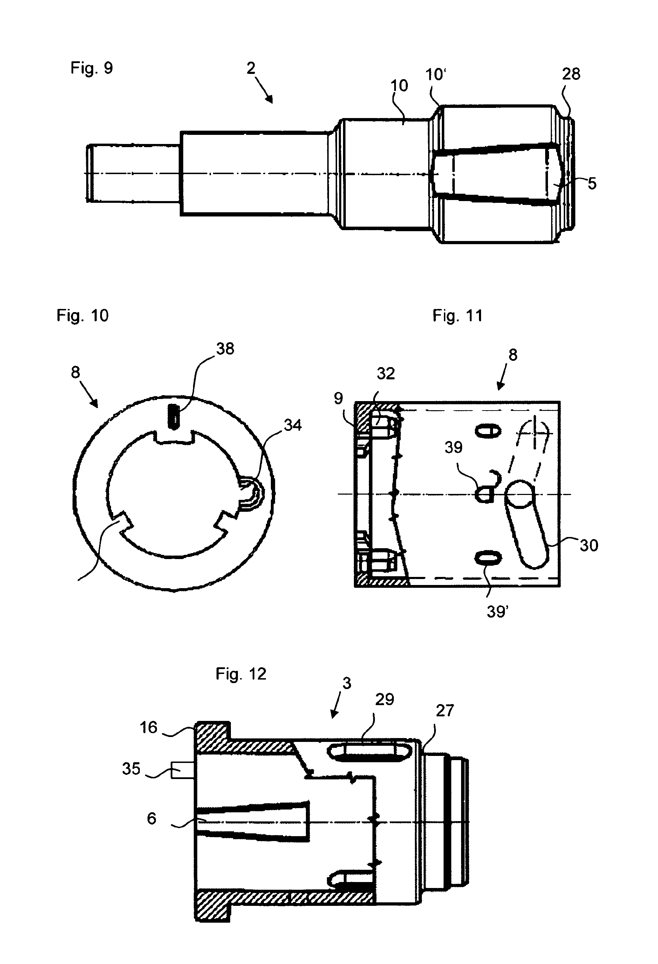

Die Keilnuten 5 münden zur Lenkradseite hin in eine Ringnut 10 (Fig. 1 und 5) bzw. in einen zurückgesetzten Absatz 10 (Fig. 8 und 9), die/der tiefer liegen kann als die Keilnuten 5.

Das von der Aufnahme umfasste Zwischenstück 3, auch Keilnabe 3 genannt, weist innenseitig Federn 6 auf, die als Keilsegmente formnegativ zu den Keilnuten 5 des Lenkspindelanschlusses 2 ausgebildet sind und die in Fig. 5, 8, 12 zu sehen sind. Das Zwischenstück 3 besitzt an seinem der Lenkspindel zugewandten Ende einen radial nach außen abstehenden Ringbund 16 und verjüngt sich in einem stufenförmigen Absatz 27 im Bereich des anderen Endes, wobei der Absatz 27 in etwa formgleich ist wie die Rampe 28 des Lenkspindelanschlusses 2.

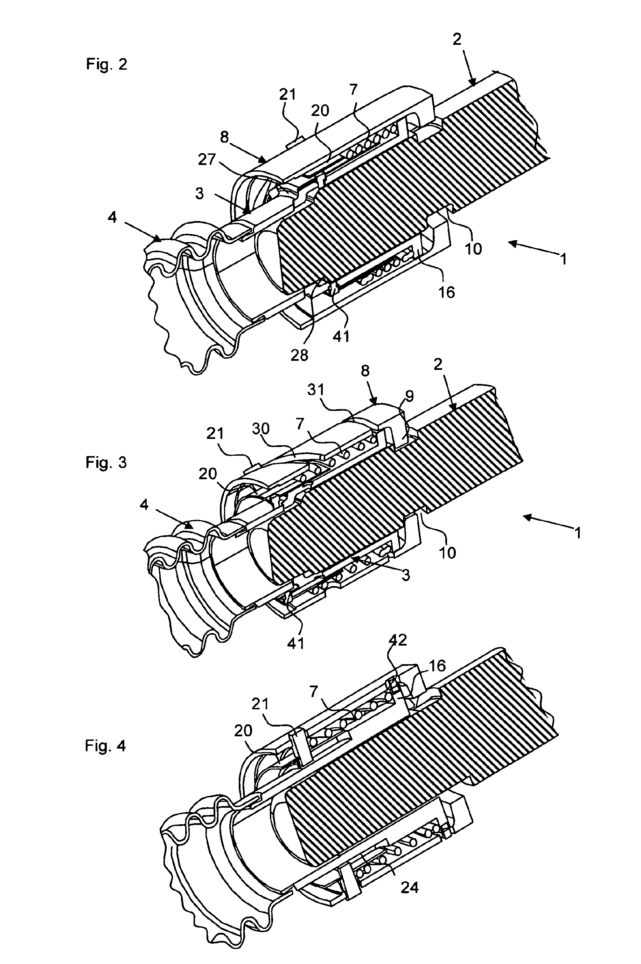

Im Bereich des Absatzes 27 ist ein Schlitz 29 in der Keilnabe 3 ausgebildet, durch den unter Ausübung einer Sperrfunktion ein Sicherungsstift 41 (vgl. Fig. 2,3) hindurch tritt. Durch dieses Schlüssel-Schloss-Prinzip wird erreicht, dass nur mit der richtigen Art von Lenkspindeln die Drehung der Hülse 8 erfolgen kann. Des Weiteren dient der Sicherungsstift 41 als Transportsicherung, damit durch Vibrationen oder ungewollte Betätigung eine Verdrehung der Hülse 8 verhindert wird.

Das von der Lenkspindel abgewandte Ende der Keilnabe 3 ist mit einem Wellrohr verbunden, das seinerseits die Gelenkgabel 4 für die Kupplung zum Getriebe trägt. Die Verbindung ist zum einen kraftschlüssig (reibschlüssig), da das Ende des Zwischenstücks 3 in das Wellrohr hineingepresst wird. Zum anderen wird nach dem Einpressen das Ende mit dem Wellrohr unter Ausbildung einer Rundnaht verschweißt.

Des Weiteren weist das Zwischenstück 3, wie in Fig. 1 zu sehen ist, an seiner Außenseite eine Längsnut 24 auf, die wie der Schlitz 29 den Absatz 27 durchbricht.

Weiterhin kann das Zwischenstück 3 einen Steuerstift 42 aufweisen, der sich von der Umfangsfläche des Ringbunds 16 erstreckt und dabei etwa in einer Bohrung angeordnet sein kann. Der Steuerstift 42 ist in Fig. 4 dargestellt.

Auf dem Zwischenstück 3 ist in einer Ausführungsform, die in Fig. 1 bis 7 dargestellt ist, zwischen dem Absatz 27 und dem Ringbund 16 ein hülsenförmiger Federspanner 20 verschiebbar angeordnet. Die Spannhülse 20 weist in einem Umfangsbereich eine Federzunge 22 mit einer Durchtrittsöffnung 40 auf, die vom Sicherungsstift 41 durchstoßen wird. Der Stift 41 ist im Durchstoß mit der Zunge 22 fest verbunden. Die Spannhülse 20 trägt mit festem Halt einen inneren Führungszapfen 23, der in die Längsnut 24 des Zwischenstücks 3 eintaucht. Ein weiterer Führungszapfen 21 erstreckt sich radial von der Hülse 20 nach außen. Gegebenenfalls können beide Führungszapfen 21,23 durch einen einzigen Zapfen realisiert sein, der die Hülse 20 durchstößt. Vorliegend weist die Spannhülse 20 zwei Zungen 22, sowie zwei durchgehende Führungszapfen 21,23 auf. Für zwei nach innen weisende Führungszapfenabschnitte 23 weist das Zwischenstück zwei entsprechend angeordnete Längsnuten 24 auf.

Das Zwischenstück 3 wird von einer Spannfeder 7 umgeben, die sich einerseits an der der Spannerhülse 20 zugewandten Seite des Ringbundes 16 des Zwischenstücks 3 und andererseits am Führungszapfen 21 abstützt (Fig. 2 bis 4).

Das Zwischenstück 3, die Spannhülse 20 und die Spannfeder 7 werden von einer Hülse 8 umfänglich umschlossen. Die Hülse 8 weist zwei Schlitze 30,31 auf, die Führungskulissen bilden. Einer der beiden Schlitze 31 ist im lenkradnahen Endbereich der Hülse 8 ausgebildet, wobei der Steuerstift 42 des Zwischenstücks 3 in den Schlitz 31 eingreift. Der Schlitz 31 verläuft so, dass eine Selbsthemmung für die Hülse 8 gegeben ist, vorzugsweise ausschließlich in Umfangsrichtung entlang einer bestimmten Strecke 31 a. An dem einen Ende dieser Strecke 31 a mündet der Umfangsabschnitt 31 a des Schlitzes 31 in eine axiale, rechtwinklig vom Umfangabschnitt 31 a abbiegende und zur Abschlusskante der Hülse 8 hin verlaufende Gasse 31 b.

Der andere Schlitz 30 ist in der Nähe des anderen Endes der Hülse 8 angeordnet und nach Art der Bahn eines Bajonett-Verschlusses wendelförmig ausgebildet. In diesen Schlitz 30 ragt der Führungszapfen 21 der Spannhülse 20 ein. Ist eine Spannhülse 20 mit zwei nach außen weisenden Führungszapfenabschnitten 21 vorgesehen, so sind in der Hülse 8 entsprechend zwei Schlitze 30 eingebracht. Die Wendelform ist nicht zwingend, jedoch vorteilhaft, um einen harten Entspannungsschlag bei Eintreten des Steuerstiftes 42 in die Gasse 31 b zu verhindern. Ein Parallelverlauf des Schlitzes 30 zur Strecke 31 a ist jedoch zu vermeiden, da in diesem Fall die Federkraft nicht wirkt und die Keilnuten 6 mit den keilförmigen Federn 5 nicht verspannt werden können. Dadurch, dass die Wendelform eine Steigung besitzt, die nicht-hemmend ist, wird die nachfolgend geschilderte Drehung der Hülse 8 erleichtert.

Die Hülse 8 besitzt an ihrem lenkradzugewandten Ende radial einwärts gerichtete Zahnsegmente 9 (zu sehen in Fig. 3, 5, 6, 7, 8,10), die in Umfangsrichtung in etwa den gleichen Abstand besitzen.

Der Montagevorgang wird nachfolgend anhand der Fig. 2 bis 4 und 5 bis 7 beschrieben, die eine Lenkspindelanordnung gemäß einer Ausführungsform zeigen. Selbstverständlich verläuft ein Montagevorgang weiterer erfindungsgemäßer Ausführungsformen, etwa der in Fig. 8 bis 12 gezeigten, analog.

Bei der Montage wird der Lenkspindelanschluss 2 mit der kupplungsseitigen Aufnahme zusammengeführt, wobei der Lenkspindelanschluss 2 in die Hülse 8 und das Zwischenstück 3 eintaucht (Fig. 5). In diesem Zusammenschiebevorgang hebt der rampenförmige Absatz 28 des Lenkspindelanschlusses 2 den an der Federzunge 22 elastisch gelagerten Sicherungsstift 41 an und entriegelt die Aufnahme für die weitere Ankopplung. Zuvor haben sich die Keilnuten 5 des Lenkspindelanschlusses 2 mit den entsprechenden Keilsegmenten 6 des Zwischenstücks 3 durch Drehung gefunden. Die Zahnsegmente 9 der Hülse 8 verfahren innerhalb der Keilnuten 5 des Lenkspindelanschlusses 2. Die Verschiebung der Lenkspindel endet mit dem Anschlag des rampenförmigen Absatzes 28 an dem Absatz 27 des Zwischenstücks 3. In dieser Stellung befinden sich die Zahnsegmente 9 der Hülse 8 in der Ringnut 10 des Lenkspindelanschlusses 2 gegenüber der Mündung dessen Keilnuten 5 (Fig. 2).

Sodann wird die Hülse 8 manuell gedreht, wobei die Kulissenbahnen 30,31 an dem Steuerstift 42 und dem Führungszapfen 21 geführt werden. Im unverdrehten Zustand der Hülse 8 (Fig. 2, 6) lastet die gesamte Spannkraft der Spannfeder 7 auf dem Steuerstift 42. Mit Verdrehen der Hülse 8 (Fig. 3) entspannt sich die Spannfeder 7 sukzessiv aufgrund der Wendelform der dem Führungszapfen 21 zugeordneten Kulissenbahn 30, wodurch die Hülse 8 und die Spannerhülse 20 zum ringbundlosen Ende des Zwischenstücks 3 verschoben werden. Diese Verschiebung von der Spannerhülse 20 verläuft ausschließlich axial, da der innere Abschnitt 23 des Führungszapfens 21 (vgl. Fig. 4) in der Längsnut 24 des Zwischenstücks 3 geführt ist. Die Belastung des Steuerstiftes 42 verringert sich also bei der Verdrehung kontinuierlich aufgrund der sich verringernden Spannkraft der Spannfeder 7. Bei Erreichen der Gasse 31 b ist keine Belastung auf dem Steuerstift 42.

Durch die Selbsthemmung der Kulissenbahn 31 des Steuerstiftes 42 bleibt die Ankopplung jederzeit kontrolliert. Bei der Verdrehung der Hülse 8 hintergreifen die Zahnsegmente 9 den durch die Ringnut 10 gebildeten Anschlag 10' bzw. die Keilsegmente des Lenkspindelanschlusses (siehe Fig. 3). Die Länge der Strecke 31 a der Kulissenbahn 31 des Steuerstiftes 42 darf nur so lang sein, dass sich nach Ende der Verdrehung die Zahnsegmente 9 auf jeden Fall hinter einem Anschlag 10' bzw. den Keilsegmenten befinden.

Tritt nun, wie in Fig. 4 dargestellt, der Steuerstift 42 in die Gasse 31 b der Kulisse 31 ein, wird der Steuerstift 42 entlastet, so dass die Spannfeder 7 sich weiter entspannt und dabei die vom Steuerstift 42 zu diesem Zeitpunkt nicht abgestützte Hülse 8 gegen den Anschlag 10' der Ringnut 10 gezogen wird. Der Steuerstift 42 verrastet dabei quasi in der Gasse 31 b, wobei nun die kupplungsseitige Aufnahme mit dem Lenkspindelanschluss 2 verspannt ist (Fig. 7).

Aufgrund der relativen Axialbewegung des Lenkspindelanschlusses 2 zur Aufnahme werden die Keilnuten 5 des Lenkspindelanschlusses 2 mit den Keilsegmenten 6 des Zwischenstücks 3 unter Ausbildung einer Keilklemmung verpresst. Die Verbindung ist somit von selbst nicht mehr lösbar.

Die Keilnuten 5 können ferner über ihre gesamte Länge hinweg eine Doppelkeilform aufweisen, d.h. dass sich die Nut 5 nicht nur in längsaxialer Richtung zur Ringnut/zum Absatz 10 hin verjüngt, sondern auch die Flanken der Nut 5 in radialer Richtung nach außen schräg auseinander streben. Durch die Doppelkeilform wird bei einer Verspannung der Steckpartner ein besonders starker Halt der Steckverbindung auf Grund der erreichten Keilklemmung geschaffen.

Bei der Demontage verlaufen die einzelnen Bewegungen rückwärts, wobei am Anfang die Spannkraft der Spannfeder 7 manuell überwunden werden muss, um den Steuerstift 42 aus der Gasse 31 b herauszuholen.

Die Anordnung der Kopplung muss nicht zwingend vor dem Kreuzgelenk 4 vorgesehen sein. Eine Anordnung hinter dem Gelenk 4 ist auch denkbar.

Alternativ kann der Steuerstift 42 und dessen Kulisse 31 entfallen. Stattdessen weist die Hülse 8 an ihrer Innenseite hinter dem jeweiligen Zahnsegment 9 einen Nocken 32 auf, zu sehen in Fig. 8 und 11, der bezüglich des Zahnsegments 9 radial zurückversetzt liegt. Der Nocken 32 fährt bei zusammengesteckter Kupplung und Drehung der Hülse 8 an der lenkspindelseitigen Stirnseite des Zwischenstücks 3 entlang, bis er, getrieben durch die Federspannung, in einen Durchbruch bzw. eine Aussparung 33 des Ringbundes 16 des Zwischenstücks 3 einrastet. Die Anordnung des Durchbruches 33 ist so gewählt, dass die Einrastung des Nockens 32 erfolgt, wenn das Zahnsegment 9 den Anschlag 10' des Lenkspindelanschlusses 2 hintergreift.

Als Transportsicherung bzw. Verdrehsicherung ist anstelle des in der obigen Ausführungsform verwendeten Sicherungsstiftes 41 an der Stirnseite des Zwischenstücks 3 für jeden Nocken 32 eine muldenförmige Einprägung 36 ausgebildet. Der Nocken 32 ist im Transportzustand in diese eingerastet, wobei die Tiefe und die Flanken der Einprägung 36 so sind, dass bei der Drehung der Hülse 8 mit relativ geringer Kraft der Nocken 32 ausgerastet werden kann.

Neben zumindest einem der Zahnsegmente 9 weist die Hülse 8 eine Aussparung 34 auf (zu sehen in Fig. 8 und 10). Die Aussparung 34 weist die Kontur eines Sicherungsringes auf. Denkbar ist auch alternativ, dass ein Sicherungsring in die Aussparung 34 eingelassen ist. Mit der Kontur bzw. dem Sicherungsring korrespondiert ein Zapfen 35, der von der Stirnseite des Zwischenstücks 3 axial zur Hülse 8 hin abragt und in den Sicherungsring dann einschnappt, wenn die Nocken 32 in die Durchbrüche 33 einrasten. Dadurch wird erreicht, dass es auch dann eine sichere Verbindung der Hülse 8 mit dem Zwischenstück 3 und damit mit der Lenkspindel gegeben ist, wenn die Spannfeder 7 brechen sollte und die Verspannung der Zahnsegmente 9 der Hülse 8 an dem Anschlag 10' des Lenkspindelanschlusses 2 aufgehoben werden würde.

Weiterhin kann, wie in Fig. 8 und 10 dargestellt, an der Stirnseite der Hülse 8 beispielsweise oberhalb eines bestimmten Zahnsegmentes 9 eine Markierung 38 in Form einer Verprägung oder farbigen Kennzeichnung vorgesehen sein, die dem Monteur die richtige relative Drehlage der Aufnahme zum Lenkspindelanschluss 2 zeigt, so dass er ohne Aufwand die Lenkspindel und die Aufnahme richtig zusammenführen kann.

Ferner können an den Enden der dem Führungszapfen 21 zugeordneten Kulissenbahn 30 Markierungen 39,39' angebracht sein (Fig. 8 und 11), die dem Monteur auch visuell zeigen, ob die Aufnahme (noch) offen (Markierung 39) oder bereits geschlossen ist (Markierung 39'). Mit anderen Worten zeigen die Markierungen 39,39' den Zustand der Verbindung zwischen Lenkspindel und Aufnahme.

Durch die optisch erfassbaren, am Umfang verteilte Zeiger, Markierungen und/oder Symbole kann dem Monteur also nicht nur die korrekte relative Drehlage der Steckpartner sondern auch der Abschluss des Montagevorgangs angezeigt werden. So werden Fehlmontagen ausgeschlossen.

Weiterhin kann die in Fig. 1 bis 7 gezeigte Spannhülse 20 durch einen Ring oder ein Ringsegment 25 ersetzt werden, der/das an zwei diametral entgegen gesetzten Stellen Löcher 27 aufweist, durch die nach Aufschieben auf das Zwischenstück 3 und Zusammenbau der Aufnahme ein den Führungszapfen bildender Bolzen 21 hindurchgepresst werden kann, wobei die Bolzenenden innerhalb der jeweiligen Kulissenbahn 30 zu liegen kommen. Diese Variation stellt eine ausbildungs- und montagetechnische Vereinfachung der Spannhülse 20 dar. Das Ringsegment 25 bietet gegenüber einem Ring den Vorteil, dass es auch seitlich auf das Zwischenstück 3 aufgebracht werden kann.

Vorteilhaft wird erfindungsgemäß der Verbindungsmechanismus erst durch Stecken der beiden Partner freigegeben. Die Verbindung erfolgt über federbelastete Keilsegmente, die verschleißbedingtes Spiel ausgleichen können. Das Öffnen der Verbindung ist nur durch bewusstes Eingreifen möglich, wobei eine Raste zur Entriegelung überwunden werden muss.

## Patentansprüche

1. Lenkungsanordnung (1), die eine Lenkspindel mit einem Lenkspindelanschluss (2) aufweist, der über ein Zwischenstück (3) mit einem Gabelkopf (4) einer Lenkungskupplung verbunden ist, wobei der Lenkspindelanschluss (2) und das Zwischenstück (3) an einander zugewandten Enden mittels zumindest eines Nut- und Feder-Führungselementepaares (5,6), das eine Drehmoment übertragende Zwangsführung bereitstellt, als Steckpartner ausgebildet sind,
**dadurch gekennzeichnet, dass**
eine Nut (5) und eine Feder (6) des zumindest einen Nut- und Feder-Führungselementepaares (5,6) an dem Lenkspindelanschluss (2) und dem Zwischenstück (3) längsaxial orientiert sind und dass
die Lenkungsanordnung (1) eine Spannvorrichtung umfasst, mittels derer die Steckpartner in einer Stecklage gegeneinander verspannbar sind.

2. Lenkungsanordnung (1) nach Anspruch 1,
**dadurch gekennzeichnet, dass**
die Nut (5) und die Feder (6) des zumindest einen Nut- und Feder-Führungselementepaares (5,6) eine Keilform aufweisen, wobei die Nut (5) sich in längsaxialer Richtung zu der von dem Steckpartner abgewandten Seite hin verjüngt, und die Feder (6) sich in längsaxialer Richtung zu der dem Steckpartner zugewandten Seite hin verjüngt.

3. Lenkungsanordnung (1) nach Anspruch 1 oder 2,
**dadurch gekennzeichnet, dass**
an einer zylindrischen Außenseite des Endes des Lenkspindelanschlusses (2), das dem Zwischenstück (3) zugewandt ist, zumindest eine, bevorzugt mehrere, besonders bevorzugt drei um 120° versetzt zueinander angeordnete Nuten (5) vorgesehen sind,
und dass an einer zylindrischen Innenseite des Zwischenstücks (3) zumindest eine oder mehrere Federn (6) bereitgestellt sind, wobei für jede Feder (6) des Zwischenstücks (3) eine Nut (5) an dem Lenkspindelanschluss (2) vorliegt.

4. Lenkungsanordnung (1) nach Anspruch 3,
**dadurch gekennzeichnet, dass**
die Nuten (5) an dem Lenkspindelanschluss (2) an ihrem von dem Zwischenstück (3) abgewandten Ende in einen Absatz (10) oder eine Ringnut (10) münden, dessen/deren radiale Tiefe einer Nuttiefe entspricht oder größer ist, und dass das Zwischenstück (3) eine relativ zu dem Zwischenstück (3) bewegliche Hülse (8) trägt, die an einem lenkspindelseitigen Ende der Hülse (8) ein oder mehrere sich von dem Rand der Hülse (8) radial nach innen erstreckenden Zahnsegmente (9) aufweist, die in der Stecklage in den Absatz (10)/die Ringnut (10) eingreifen, der/die durch seine kupplungsseitige Flanke (10') einen Anschlag bildet.

5. Lenkungsanordnung (1) nach zumindest einem der Ansprüche 1 bis 4,
**dadurch gekennzeichnet, dass**
die Spannvorrichtung
- einen abkragenden Ringbund (16), der sich an dem lenkspindelseitigen Ende des Zwischenstück (3) radial auswärts erstreckt, und
- eine Schraubenfeder (7), die um das Zwischenstück (3) angeordnet ist und die sich einenends an dem Ringbund (16) abstützt, und
- eine Führungsvorrichtung mit zumindest einem Führungszapfen (21), die auf dem Zwischenstück (3) axial beweglich angeordnet ist, wobei sich die Schraubenfeder (7) anderenends an dem Führungszapfen (20) abstützt,
umfasst.

6. Lenkungsanordnung (1) nach Anspruch 5,
**dadurch gekennzeichnet, dass**
die Führungsvorrichtung
- eine Spannhülse (20) ist, von der sich der Führungszapfen (21) radial auswärts erstreckt, wobei die Spannhülse (20) ferner in einem Umfangsbereich eine Federzunge (22), die von einem Sicherungsstift (41) durchdrungen wird, und einen zweiten Führungszapfen (23) aufweist, der sich radial nach innen erstreckt, und der in eine Längsnut (24), die in der Außenseite des Zwischenstücks (3) längsaxial eingebracht ist, eingreift, oder
- ein Ring oder Ringsegment (25) ist, der oder das an zwei diametral entgegengesetzten Stellen Löcher (26) aufweist, die einen den Führungszapfen (21) bildenden Bolzen aufnehmen.

7. Lenkungsanordnung (1) nach Anspruch 6,
**dadurch gekennzeichnet, dass**
das Zwischenstück (3) sich an dem von dem Ringbund (16) abgewandten kupplungsseitigen Ende in einem stufenförmigen Absatz (27) verjüngt, der näherungsweise einer Rampenform (28) des kupplungsseitigen Endes des Lenkspindelanschlusses (2) entspricht, wobei in einem absatznahen Bereich des Zwischenstücks (3) in dem Abschnitt zwischen dem Absatz (27) und dem Ringbund (16) ein Schlitz (29) ausgebildet ist, durch den sich der Sicherungsstift erstreckt, und dass die Längsnut (24) in dem absatznahen Bereich des Zwischenstück (3) in dem Abschnitt zwischen dem Absatz (27) und dem Ringbund (16) den Absatz (27) durchbrechend angeordnet ist.

8. Lenkungsanordnung (1) nach Anspruch 6 oder 7,
**dadurch gekennzeichnet, dass**
die Hülse (8), die das Zwischenstück (3), die Führungsvorrichtung und die Schraubenfeder (7) umgibt, zumindest einen ersten Schlitz (30) aufweist, der eine Führungskulisse für den Führungszapfen (21) der Führungsvorrichtung bildet, und der insbesondere wendelförmig verläuft.

9. Lenkungsanordnung (1) nach zumindest einem der Ansprüche 5 bis 8,
**dadurch gekennzeichnet, dass**
das Zwischenstück (3) einen Steuerstift (42) umfasst, der sich von einer Umfangsfläche des Ringbunds (16) erstreckt, wobei der Steuerstift insbesondere in einer Bohrung in der Umfangsfläche angeordnet ist, und wobei der Steuerstift in einen zweiten Schlitz (31) in der Hülse (8) eingreift, der in dem lenkspindelseitigen Endbereich der Hülse (8) als Führungskulisse ausgebildet ist, und der insbesondere einen ersten Streckenabschnitt (31a) in Umfangsrichtung und einen zweiten Streckenabschnitt (31 b) rechtwinklig zu dem ersten Streckenabschnitt (31a) in axialer Richtung zu dem lenkspindelseitigen Ende der Hülse (8) hin verlaufend aufweist.

10. Lenkungsanordnung (1) nach zumindest einem der Ansprüche 5 bis 9,
**dadurch gekennzeichnet, dass**
die Hülse (8) an ihrer Innenseite hinter jedem Zahnsegment (9) einen Nocken (32) aufweist, der bezüglich des Zahnsegments (9) radial zurückversetzt ist und der in der Stecklage in eine Aussparung (33) des Ringbunds (16) eingreift, wobei das Zahnsegment (9) die kupplungsseitige Flanke (10') des Absatzes (10)/der Ringnut (10) hintergreift, und dass
für jeden Nocken (32) eine muldenförmige Ausprägung (36) an einer Stirnseite des Zwischenstücks (3) als Transportsicherung ausgebildet ist, in die die Nocken (32) in einer Transportanordnung eingreifen.

## Claims

1. Steering arrangement (1), having a steering spindle with a steering spindle connection (2) which is connected via an intermediate piece (3) to a fork crown (4) of a steering coupling, wherein the steering spindle connection (2) and the intermediate piece (3) are formed as plug partners at ends facing towards each other by means of at least one tongue and groove guide element pair (5, 6) which provides a torque-transmitting priority control,
**characterised in that**
a tongue (6) and a groove (5) of the at least one tongue and groove guide element pair (5, 6) are orientated in a longitudinal axial direction at the steering spindle connection (2) and the intermediate piece (3), and
the steering arrangement (1) comprises a clamping device, by means of which the plug partners can be clamped against each other in a plugging position.

2. Steering arrangement (1) according to claim 1,
**characterised in that**
the tongue (6) and the groove (5) of the at least one tongue and groove element pair (5, 6) have a wedge shape, wherein the groove (5) tapers in the longitudinal axial direction towards the side facing away from the plug partner, and the tongue (6) tapers in the longitudinal axial direction towards the side facing towards the plug partner.

3. Steering arrangement (1) according to claim 1 or 2,
**characterised in that**
at least one, preferably a plurality of, particularly preferably three, grooves (5) offset relative to each other by 120° are provided on a cylindrical outer side of the end of the steering spindle connection (2) which faces towards the intermediate piece (3),
and at least one, or a plurality of, tongue(s) (6) is / are provided on a cylindrical inner side of the intermediate piece (3), wherein for each tongue (6) of the intermediate piece (3) a groove (5) is provided on the steering spindle connection (2).

4. Steering arrangement (1) according to claim 3,
**characterised in that**
the grooves (5) on the steering spindle connection (2) open at their end facing away from the intermediate piece (3) into a recess (10) or an annular groove (10), of which the radial depth corresponds to or is larger than a groove depth, and the intermediate piece (3) has a sleeve (8) which can be moved relative to the intermediate piece (3), which sleeve (8) has, at a steering spindle-side end thereof, one or more tooth segments (9) extending radially inwards from the edge of the sleeve (8) which engage in the plugging position in the recess (10) / the annular groove (10) which forms a stop through its coupling-side flank (10').

5. Steering arrangement (1) according to at least one of the claims 1 to 4, **characterised in that**
the clamping device comprises
- a downwardly extruding annular collar (16) which extends radially outwards at the steering spindle-side end of the intermediate piece (3), and
- a helical spring (7) which is arranged around the intermediate piece (3) and which is supported at one end on the annular collar (16), and
- a guide device having at least one guide pin (21) which is arranged to be axially movable on the intermediate piece (3), wherein the helical spring (7) rests at the other end on the guide pin (20).

6. Steering arrangement (11) according to claim 5,
**characterised in that**
the guide device comprises
a clamping sleeve (20), from which the guide pin (21) extends radially outwards, wherein the clamping sleeve (20) further has in a peripheral region a spring tongue (22) which is penetrated by a securing pin (41), and has a second guide pin (23) which extends radially inwards and which engages in a longitudinal groove (24) which is incorporated in a longitudinal axial direction in the outer side of the intermediate piece (3), or
- is a ring or ring segment (25) which has holes (26) at two diametrically opposing points, which holes (26) receive a bolt forming the guide pin (21).

7. Steering arrangement (1) according to claim 6,
**characterised in that**
the intermediate piece (3) tapers on the coupling-side end facing away from the annular collar (16) in a step-form recess (27) which corresponds approximately to a ramp form (28) of the coupling-side end of the steering spindle connection (2), wherein a slot (29) is formed in a recess-proximal region of the intermediate piece (3) in the portion between the recess (27) and the annular collar (16), through which slot (29) the securing pin extends, and the longitudinal groove (24) is arranged in the recess-proximal region of the intermediate piece (3) in the portion between the recess (27) and the annular collar (16) thereby penetrating the recess (27).

8. Steering arrangement (1) according to claim 6 or 7,
**characterised in that**
the sleeve (8) which surrounds the intermediate piece (3), the guide device and the helical spring (7) has at least one slot (30) which forms a guide passage for the guide pin (21) of the guide device and which extends in particular helically.

9. Steering arrangement (1) according to at least one of the claims 5 to 8,
**characterised in that**
the intermediate piece (3) comprises a control pin (42) which extends from a peripheral area of the annular collar (16), wherein the control pin is arranged in particular in a hole in the peripheral area, and wherein the control pin engages in a second slot (31) in the sleeve (8) which is formed in the steering spindle-side end region of the sleeve (8) as a guide passage, and which in particular has a first portion (31 a) in the peripheral direction and a second portion (31 b) at a right angle to the first portion (31 a) extending in the axial direction towards the steering spindle-side end of the sleeve (8).

10. Steering arrangement (1) according to at least one of the claims 5 to 9,
**characterised in that**
the sleeve (8) has a cam (32) on its inner side behind each tooth segment (9), which cam (32) is set back radially with respect to the tooth segment (9) and which engages in the plugging position in a notch (33) of the annular collar (16), wherein the tooth segment (9) engages behind the coupling-side flank (10') of the recess (10) / the annular groove (10), and a depression shaped element (36) is formed for each cam (32) at an end face of the intermediate piece (3) for security during transport, into which the cams (32) engage in a transport arrangement.

## Revendications

1. Agencement de direction (1) qui présente un arbre de direction muni d'un raccord d'arbre de direction (2) qui est relié par l'intermédiaire d'un élément intermédiaire (3) à une tête de fourche (4) d'un accouplement de direction, le raccord d'arbre de direction (2) et la pièce intermédiaire (3) sont réalisés sous la forme d'éléments enfichables aux extrémités orientées l'une vers l'autre, au moyen d'au moins une paire d'éléments de guidage (5, 6) à rainure et à ressort, qui établit un guidage forcé transmettant le couple, **caractérisé en ce qu'**une rainure (5) et un ressort (6) de l'au moins une paire d'éléments de guidage à rainure et ressort (5, 6) sont orientées dans la direction axiale longitudinale sur le raccord d'arbre de direction (2) et sur l'élément intermédiaire (3), et **en ce que** l'agencement d'arbre de direction (1) comprend un dispositif de serrage au moyen duquel les éléments enfichables peuvent être serrés l'un par rapport à l'autre dans une position enfichable.

2. Agencement de direction (1) selon la revendication 1, **caractérisé en ce que** la rainure (5) et les ressorts (6) de l'au moins une paire d'éléments de guidage (5, 6) à rainure et à ressort sont cunéiformes, la rainure (5) s'amincissant dans la direction axiale longitudinale en direction du côté en regard de l'élément enfichage, et les ressorts (6) s'amincissant dans la direction axiale longitudinale en direction du côté orienté vers l'élément enfichable.

3. Agencement de direction (1) selon la revendication 1 ou 2, **caractérisé en ce que** sur un côté extérieur cylindrique de l'extrémité du raccord d'arbre de direction (2) qui est orienté vers l'élément intermédiaire, sont disposés au moins une, de préférence plusieurs rainures (5), de préférence encore trois rainures décalées les unes par rapport aux autres de 120° et **en ce que** sur un côté intérieur cylindrique de l'élément intermédiaire (3) sont disposés un ou plusieurs ressorts (6), pour chaque ressort (6) de l'élément intermédiaire (3) une rainure (5) étant disposée sur le raccord d'arbre de direction (2).

4. Agencement de direction (1) selon la revendication 3, **caractérisé en ce que** les rainures (5) sur le raccord d'arbre de direction (2) au niveau de leur extrémité en regard de l'élément intermédiaire (3) débouchent dans un décrochement (10) ou dans une rainure annulaire (10), dont la profondeur radiale est égale ou supérieure à la profondeur d'une rainure, et **en ce que** l'élément intermédiaire (3) porte une douille (8) pouvant se déplacer par rapport à l'élément intermédiaire (3), ladite douille (8) sur une extrémité côté de direction présente un ou plusieurs segments dentés (9) s'étendant à partir du bord de la douille (8) radialement vers l'intérieur, lesdits segments dentés s'engrènent dans la position enfichable dans le décochement (10) / la rainure annulaire (10) formant ainsi par ses flancs côté accouplement (10') une butée.

5. Agencement de direction (1) selon au moins l'une quelconque des revendications 1 à 4, **caractérisé en ce que** le dispositif de serrage comprend un épaulement annulaire (16) faisant saillie, qui sur l'extrémité de l'élément intermédiaire (3) côté arbre de direction s'étend radialement vers l'extérieur, et un ressort de compression (7), qui est disposé autour de l'élément intermédiaire (3) et qui à une extrémité s'appuie sur l'épaulement annulaire (3) et un dispositif de guidage doté d'au moins un tourillon de guidage (21), qui est disposé mobile axialement sur l'élément intermédiaire (3), le ressort de compression (7) à l'autre extrémité s'appuyant sur le tourillon de guidage (20).

6. Agencement de direction (1) selon la revendication 5, **caractérisé en ce que** le dispositif de guidage est une douille de serrage (20), à partir de laquelle le tourillon de guidage (21) s'étend vers l'extérieur radialement, la douille de serrage (20) présentant en outre dans une zone circonférentielle une lame de ressort (22) que pénètre une goupille de sécurité (41), et présente un second tourillon de guidage (23) qui s'étend radialement vers l'intérieur et qui s'engrène dans une rainure longitudinale (24), laquelle est introduite de manière axiale longitudinale dans le côté extérieur de l'élément intermédiaire (3), ou est un anneau ou un segment annulaire (25) qui présente dans deux positions diamétralement opposées des trous (26) où est logé un boulon formant le tourillon de guidage (21).

7. Agencement de direction (1) selon la revendication 6, **caractérisé en ce que** l'élément intermédiaire (3) s'amincit au niveau de l'extrémité côté accouplement en regard de l'épaulement annulaire (16) dans un décrochement (27) étagé qui correspond approximativement à une forme de rampe (28) de l'extrémité du raccord d'arbre de direction (2) côté accouplement, dans une zone de l'élément intermédiaire (3) à proximité du décrochement dans la section entre le décrochement (27) et l'épaulement annulaire (16) est aménagée une fente (29) dans laquelle s'introduit la goupille de sécurité et **en ce que** la rainure longitudinale (24) traverse le décrochement (27) dans la zone de l'élément intermédiaire (3) à proximité du décrochement dans la section entre le décrochement (27) et l'épaulement annulaire (16).

8. Agencement de direction (1) selon la revendication 6 ou 7, **caractérisé en ce que** la douille (8) qui entoure l'élément intermédiaire (3), le dispositif de guidage et le ressort de compression (7) présente au moins une première fente (30) qui forme une coulisse de guidage pour le tourillon de guidage (21) du dispositif de guidage et qui s'étend notamment en spirale.

9. Agencement de direction (1) selon au moins l'une quelconque des revendications 5 à 8, **caractérisé en ce que** l'élément intermédiaire (3) comprend une goupille de commande (42) qui s'étend à partir d'une surface circonférentielle de l'épaulement annulaire (16), la goupille de commande étant disposée notamment dans un trou dans la surface circonférentielle et la goupille de commande s'engrenant dans une seconde fente (31) dans la douille, qui est conçue comme une coulisse de direction dans la zone d'extrémité de la douille (8) côté arbre de direction et qui notamment présente une première section de trajet (31 a) s'étendant dans la direction circonférentielle et une seconde section de trajet (31 b) perpendiculaire à la première section de trajet (31 a) s'étendant dans la direction axiale par rapport à l'extrémité de la douille (8) côté arbre de direction.

10. Agencement de direction (1) selon au moins l'une quelconque des revendications 5 à 9, **caractérisé en ce que** la douille (8) présente sur son côté intérieur derrière chaque segment denté (9) une partie en saillie (32) qui est décalée radialement par rapport au segment denté (9) et qui s'engrène dans la position enfichable dans un évidemment (33) du tourillon annulaire (16), le segment denté (9) s'engrenant par l'arrière dans les flancs (10') du décrochement (10) / rainure annulaire (10) côté accouplement, et **en ce que** pour chaque partie en saillie (32) un évidemment en forme d'auge est conçu sur une face avant de l'élément intermédiaire (3) en tant que protection pour le transport dans laquelle s'engrènent les parties en saillie (32) dans une disposition de transport.
